# EUROPEAN PATENT APPLICATION

(11) **EP 0 882 664 A2**
(43) Date of publication of application: **09.12.1998**
(21) Application number: 98850053.4
(22) Date of filing: 08.04.1998
(51) Int. Cl.: B65G 47/31

(54) **A method and apparatus for compacting timber pieces**

(30) Priority: 10.04.1997 SE 9701331
(71) Applicant: Hammars Interlog AB, 870 52 Nyland (DE)
(72) Inventor: Hörnström, Kent, 872 96 Bjärtra (SE)
(74) Representative: Örtenblad, Bertil Tore

(57) **Abstract**

A method of compacting pieces of timber on a cross-conveyor (2), such as a chain conveyor, that lacks timber pushing or dogging means, where the timber pieces lie in mutual abutment at the conveyor infeed end (10) to form a layer (11) of timber pieces.

The invention is characterized by accelerating the timber pieces one by one at the conveyor infeed end (10) by means of a first accelerator conveyor (12) which travels faster than the cross-conveyor (2) and the outfeed end of which is located at a level above the level (13) of the cross-conveyor (2), wherein this difference in level exceeds the thickness of the timber pieces concerned. A down-pusher (14) located at the outfeed end of the accelerator conveyor (12) is caused to push the timber pieces down against the accelerator conveyor (12), thereby causing mutually adjacent timber pieces on the cross-conveyor (2) to overlap one another.

The invention also relates to apparatus.

## Description

The present invention relates to a method and to an apparatus for compacting timber pieces.

More specifically, the invention relates to compacting timber pieces on various kinds of cross-conveyors, that is conveyors in which the timber pieces are conveyed transversely to their longitudinal axes, such as cross-conveyors in timber trimming mills, rough sorting mills and other forms of cross-conveyors. The present invention can be applied in particular with so-called tray sorters, that is an arrangement in which horizontal cross-conveyors are located one above the other and used instead of traditional timber frames.

One problem encountered when increasing the capacity of a saw mill or reconstructing a saw mill is that some conveyors cannot be made long enough to carry a desired number of timber pieces simultaneously. For instance, it may be found with so-called tray sorters that the tray-sorter conveyors cannot be made sufficiently long to carry a desired number of timber pieces.

This problem is solved by the present invention, which provides a solution in which a conveyor of given length is able to carry more timber pieces than was earlier possible.

The present invention thus relates to a method of compacting timber pieces on a cross-conveyor, such as a chain-conveyor, which lacks timber pushers or dogs and with which the timber pieces lie in mutual abutment in a layer at the infeed end of the conveyor, wherein the method is characterized by accelerating the timber pieces at the conveyor infeed end one at a time, by means of a first accelerating conveyor which travels more rapidly than the cross-conveyor and whose outfeed end is caused to lie on a level above the level of the cross-conveyor, wherein the level difference exceeds the thickness of the timber pieces concerned, and wherein a pushing device located at the outfeed end of the accelerating conveyor is caused to push the timber pieces down onto said accelerating conveyor, wherewith timber pieces lying on the cross-conveyor will overlap. ?

The invention also relates to an arrangement of the kind having the significant features set forth in Claim 8.

The invention will now be described in more detail with reference to exemplifying embodiments of the invention and also with reference to the accompanying drawings, in which
Figure 1 illustrates parts of the input end and the output end of a so-called tray sorter with which the present invention is applied;
Figure 2 illustrates a modified output end of the tray sorter;
Figure 3 shows the input end of the tray sorter in larger scale;
Figure 4 shows in larger scale a first embodiment of the output end of the tray sorter; and
Figure 5 shows in larger scale a second embodiment of the output end of the tray sorter.

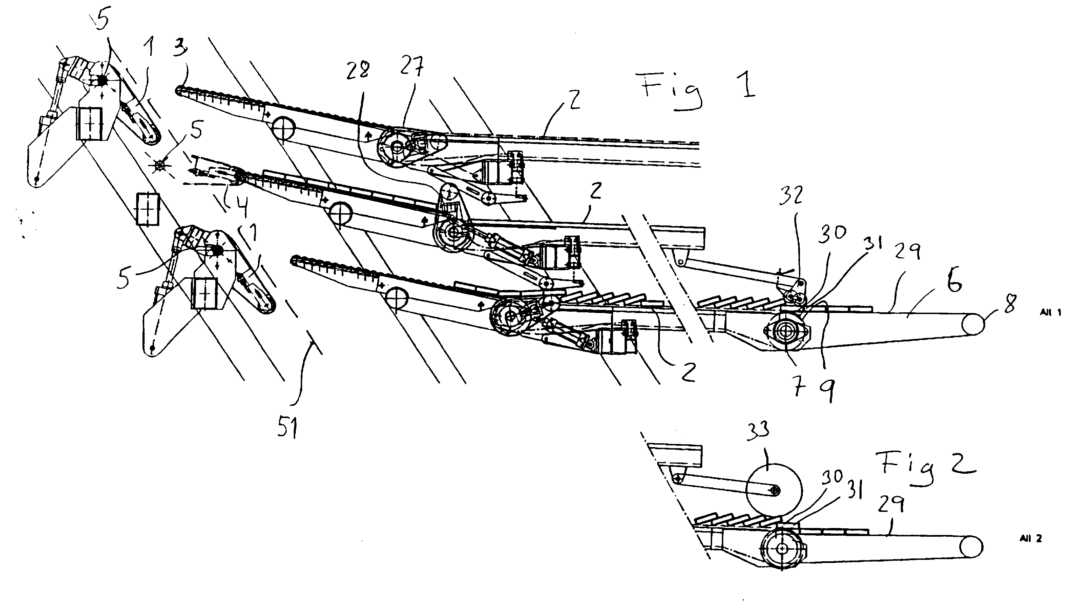

Described in Swedish Patent Specification SE 9603636-3 is a so-called tray sorter which includes pivotal flaps 1 at the input end 3 of the trays 2. Two such flaps 1 are shown in Figure 1. A similar flap, however, is provided at the front end 4 of the trays, these flaps being shown only in Figure 1. The pivot centre of the flap is referenced 5. The flaps can be swung between an inactive, downwardly extending position, shown in full lines, and an active, more horizontal position in which the flaps coact with the input end of a tray, as shown with the front end of the flap 4.

The timber pieces are fed down on a conveyor 51 provided with pushers or dogging means, as indicated with a broken line in Figure 1. When a piece of timber shall be fed from the pusher-equipped conveyor 51 onto a tray 2, the flap 1 of the associated tray is moved to the position indicated by the reference numeral 4, wherewith the timber piece rolls onto the flap and into the infeed end of the tray.

The tray sorter described in said patent specification also includes at the outfeed end of each tray 2 a pivotal flap 6 which can be swung about its pivot centre 7 between a horizontal position, shown in Figure 1, and a downwardly extending position in which the front end 8 of the flap 6 coacts with the infeed end 9 of the flap 6 of an underlying tray. The timber pieces are thus fed out from a given tray 2 onto a cross-conveyor for further transportation, via one or more coacting flaps 6.

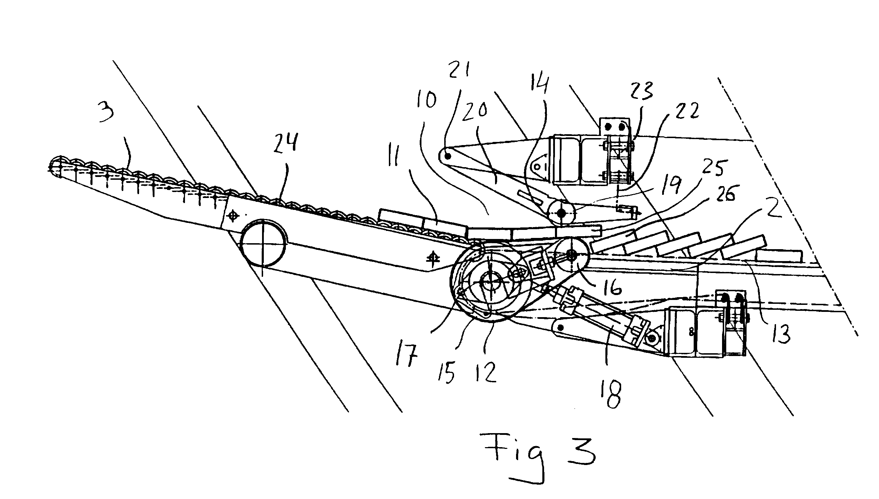

The above described tray sorter will be more apparent from the aforesaid patent specification and will not therefore be described in further detail in this document.
The present invention relates to a method of compacting timber pieces on a cross-conveyor 2, such as a chain conveyor, that lacks timber pushers or dogging means, where the timber pieces lie in mutual abutment in a layer 11 at the infeed end 10 of the conveyor, as shown in Figure 3.

In accordance with the invention, the timber pieces located at the infeed end of the conveyor are accelerated one at a time by means of a first accelerator conveyor 12 which moves more quickly than the cross-conveyor 2. The outfeed end of the accelerator conveyor 12 is caused to be located at a level above the level 13 of the cross-conveyor 2. This level difference exceeds the thickness of the timber pieces concerned. A timber down-pushing device 14 mounted at the output end of the accelerator conveyor 12 is caused to press the timber pieces down against the accelerator conveyor.

The accelerator conveyor 12 will ideally comprise a belt conveyor that includes a number of mutually parallel belts that are spaced from one another perpendicularly to the plane of the paper in Figure 3, said belts running over wheels 15, 16.

The accelerator conveyor can be swung about a pivot shaft 17 by means of a power generating device, such as a position-sensing hydraulic piston-cylinder device 18. This pivotability enables the level difference to the set in relation to the thickness of the timber pieces concerned.

The aforesaid down-pusher 14 may comprise a roller 19 carried by an arm 20 that is suspended around a pivot joint 21. The apparatus includes some form of suitable lifting arrangement, such as a wire 22 and a wire take-up drum 23, for lifting the down-pusher to a level above the timber pieces when the present invention is not in use. The down-pusher may, alternatively, have the form of a slide bar that glides on top of the timber pieces.

The infeed end 3 of the trays 2 is suitably comprised of a roller conveyor 24, so as to form said layer 11 of timber pieces.

A brief description will now be given of the manner in which the apparatus operates. Because the aforesaid level difference exists in combination with the accelerated conveyor that moves faster than the cross-conveyor, a timber piece 25 will be caused to overlap the timber piece 26, while the rear end of the timber piece 25 will lie against the cross-conveyor 2, i.e. will take a similar position to the timber piece 26. Because the timber piece 25 is held between the accelerator conveyor and the down-pusher 14, the timber piece will be fed generally horizontally out and in over the preceding timber piece 26.

The timber pieces on the cross-conveyor will therefore overlap one another, as shown in Figure 3, meaning that the cross-conveyor is able to accommodate more timber pieces than would otherwise be the case. To which degree the compacting will occur is certainly determined how much faster the accelerated conveyor will move compared to the cross-conveyor.

According to one preferred embodiment, the first accelerator conveyor 12 has a conveying speed that exceeds the conveying speed of the cross-conveyor by from 10 to 40%.
Ideally, the level difference between the cross-conveyor and said accelerator conveyor 12 will be caused to exceed the thickness of the timber pieces concerned but be smaller than twice the thickness of said timber pieces.

At those times when the inventive method is not utilized, the accelerator conveyor can be lowered to a position in the plane of the cross-conveyor by means of the piston-cylinder device 18, as indicated at 27 in Figure 1. The down-pusher 14 can also be raised when required, as beforementioned. According to one preferred embodiment of the invention, the accelerator conveyor 12 can be pushed up by means of the piston-cylinder device 18 to a position shown at 28 in Figure 1, in which the accelerator conveyor functions as a stop means. The accelerator conveyor will not, of course, be driven when in this position 28.

According to one particularly preferred embodiment, the infeed end 30 of a second accelerator conveyor 29 is provided at the outfeed end 31 of the cross-conveyor. Ideally, this accelerator conveyor will have the form of a belt conveyor. The accelerator conveyor 29 moves faster than the cross-conveyor. The timber pieces are caused to be fed in onto the accelerator conveyor. A down-pusher means 32, 33 is provided above the outfeed end of the cross-conveyor and caused to press down against the timber pieces.

As a result of the coaction between the cross-conveyor, the second accelerator conveyor and the down-pusher means, the timber pieces will again form a layer 34.

According to a first embodiment, the down-pusher means is comprised of a number of mutually parallel rollers 35 having a diameter that exceeds the width of the timber pieces concerned. The rollers 35 are mounted on a shaft 36 that extends perpendicular to the plane of the paper in Figure 5. The shaft 36 is suspended on an arm 37 for each roller, said arm being pivotally mounted on a pivot shaft 38.

The accelerator conveyor 29 is located at a lower level than the cross-conveyor. According to one preferred embodiment, the level difference between the cross-conveyor and the second accelerator conveyor corresponds to or is slightly greater than the thickness of the timber pieces concerned.

The apparatus operates in the following manner. The conveying direction is arrowed in Figure 5. The roller 35 pushes down the timber piece 41 which, in turn, presses the timber piece 40 down against the cross-conveyor 2. When the timber pieces have been transported a short distance to the right in Figure 5, the pressure exerted by the timber piece 41 on the timber piece 40 will essentially cease, because the roller 35 then lies against the timber piece 42. Because of the aforesaid level difference, the timber piece 40 will fall down onto the accelerator conveyor. The timber piece 39 will have moved out of the way by then.

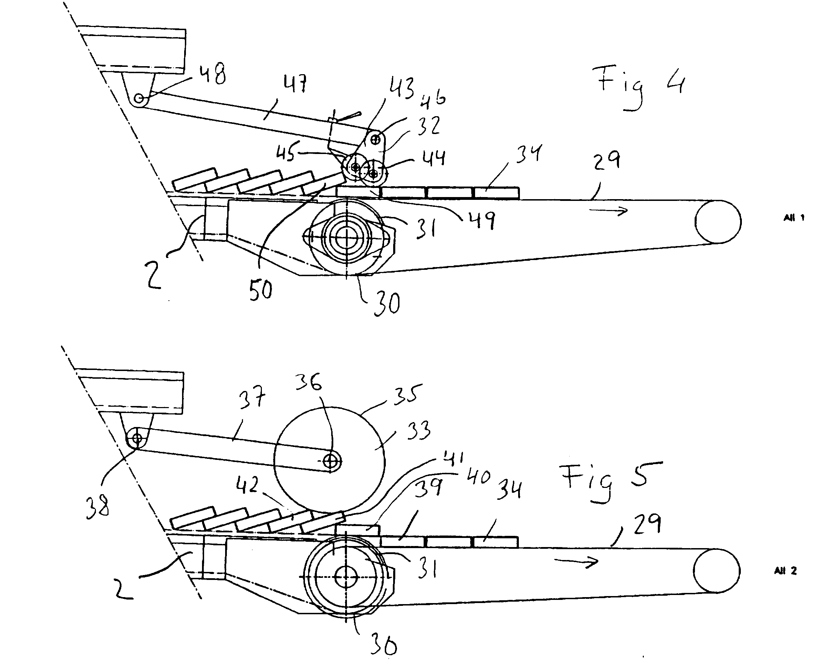

According to another embodiment, the down-pusher means includes a number of mutually parallel rockers 43, each of which carries a pair of rollers 44, 45 positioned mutually sequentially in the conveying direction of the cross-conveyor. The diameter of the rollers is smaller than the width of the timber pieces concerned. The rockers are mutually spaced perpendicularly to the plane of the paper in Figure 4. Each of the rockers is pivotally mounted on a pivot shaft 46 in an arm 47 which, in turn, is pivotally suspended via a pivot shaft 48.

One of the rollers 44 is caused to push down on the timber piece 49 located at the infeed end of the accelerator conveyor at the same time as the second roller 45 is caused to lie against the immediately following timber piece 50. As the roller 44 presses down the timber piece 49, movement of said timber piece will be accelerated and the timber piece 50 will fall down to a horizontal position, thereby recreating a layer of timber pieces 34.

According to a further preferred embodiment of the invention, the second accelerator conveyor is moved at a speed that exceeds the speed of the cross-conveyor by 10 to 40%.

It will be evident from the aforegoing that the present invention solves the problem recited in the introduction.

Although the invention has been described with reference to a number of embodiments thereof, it will be obvious that modifications can be made. For instance, the accelerator conveyors may be chain conveyors. The invention can also be applied to conveyors other than tray sorters, such as with conventional, horizontal chain conveyors that are too short.

The present invention shall thus not be considered restricted to the aforedescribed and illustrated embodiments thereof, since variations and modifications can be made within the scope of the following claims.

## Claims

1. A method of compacting pieces of timber on a cross-conveyor (2) that lacks timber dogging or pushing means, such as a chain conveyor, where the timber pieces mutually abut one another at the infeed end (10) of the conveyor to form a layer (11) of timber pieces, **characterized by** accelerating the timber pieces at the conveyor infeed end (10) one at a time by means of a first accelerator conveyor (12) which travels faster than the cross-conveyor (2) and the outfeed end of which is located at a level above the level (13) of the cross-conveyor (2); causing the level difference to exceed the thickness of the timber pieces concerned; and pushing the timber pieces down against the accelerator conveyor (12) at the outfeed end of said conveyor (12) by means of a down-pusher (14), thereby causing mutually adjacent timber pieces on the cross-conveyor (2) to overlap one another.

2. A method according to Claim 1, **characterized by** positioning at the outfeed end (31) of the cross-conveyor (2) the infeed end (30) of a second accelerator conveyor (29) that travels faster than the cross-conveyor (2) and onto which the timber pieces are fed; and by placing above the infeed end (30) of said accelerator conveyor a down-pusher (32;33) which is caused to act on the timber pieces from above.

3. A method according to Claim 2, **characterized by** placing the accelerator conveyor (29) at a lower level than the cross-conveyor; by including in the down-pusher (33) a number of mutually parallel rollers (35) whose diameter exceeds the width of the timber pieces in question, said rollers (35) being caused to push down the timber piece (40) located at the infeed end (30) of the accelerator conveyor (29) via the pressure exerted by the immediately following timber piece. ?

4. A method according to Claim 2, **characterized in** that the down-pusher (32) includes a number of mutually parallel rockers (43) each of which carries a pair of rollers (44,45) placed mutually sequentially in the conveying direction of the cross-conveyor, said rollers having a diameter that is smaller than the width of the timber pieces concerned; and in that one of the rollers (44) is caused to push down the timber piece (49) that is located at the infeed end of the accelerator conveyor at the same time as the other roller (44) is caused to lie against the immediately following timber piece (50).

5. A method according to Claim 1, 2, 3 or 4, **characterized by** causing the level difference between the cross-conveyor (2) and said first accelerator conveyor (12) to exceed the thickness of the timber piece concerned but to be smaller than twice the thickness of said timber piece.

6. A method according to Claim 3, **characterized by** causing the level difference between the cross-conveyor (2) and said second accelerator conveyor (12) to correspond to or slightly exceed the thickness of the timber pieces concerned.

7. A method according to Claim 1, 2, 3, 4, 5 or 6, **characterized in** that the first accelerator conveyor (12) and, when applicable, the second accelerator conveyor (29), is/are caused to travel at a speed which exceeds the conveying speed of the cross-conveyor (2) by 10 to 40%.

8. Apparatus for compacting pieces of timber on a cross-conveyor (2) that lacks timber pushing or dogging devices, such as a chain conveyor, with which the timber pieces are in mutual abutment at the conveyor infeed end (10) to form a layer (11) of timber pieces, **characterized by** a first accelerator conveyor (12) which is located at the conveyor infeed end (10) and which travels faster than the cross-conveyor (2) and the outfeed end of which is located at a level above the level (13) of the cross-conveyor (2), wherein said level difference exceeds the thickness of the timber pieces concerned; and by a down-pusher (14) provided at the outfeed end of the accelerator conveyor (12) and functioning to press the timber pieces down against the accelerator conveyor.

9. Apparatus according to Claim 8, **characterized in** that the infeed end (20) of a second accelerator conveyor (29) is positioned at the outfeed end (31) of the cross-conveyor, said second accelerator conveyor (29) traveling faster than the cross-conveyor (2); and in that a down-pusher (32;33) is provided above the infeed end (30) of the accelerator conveyor (29) for exerting a pushing force on the timber pieces from above.

10. Apparatus according to Claim 9, **characterized in** that the down-pusher (33) includes a plurality of mutually parallel rollers (35) whose diameter exceeds the width of the timber pieces concerned.

11. Apparatus according to Claim 9, **characterized in** that the down-pusher (32) includes a number of mutually parallel rockers (43) which each carry a pair of rollers (44,45) placed mutually sequentially in the conveying direction of the cross-conveyor and having a diameter that is smaller than the width of the timber pieces concerned.

12. Apparatus according to Claim 8, 9, 10 or 11, **characterized in** that the difference in level between the cross-conveyor (2) and said first accelerator conveyor (12) exceeds the thickness of the timber pieces concerned but is smaller than twice said thickness.

13. Apparatus according to Claim 10, **characterized in** that the difference in level between the cross-conveyor (2) and said accelerator conveyor (29 is equal to or slightly greater than the thickness of the timber pieces concerned.

14. Apparatus according to Claim 8, 9, 10, 11, 12 or 13, **characterized in** that the first accelerator conveyor (12) and, when applicable, the second accelerator conveyor (29) travel at a speed which is 10 to 40% greater than the conveying speed of the cross-conveyor (2).
